# EUROPÄISCHE PATENTSCHRIFT

(11) **EP 3 144 646 B1**
(45) Veröffentlichungstag und Bekanntmachung des Hinweises auf die Patenterteilung: **07.10.2020**
(21) Anmeldenummer: 16183486.6
(22) Anmeldetag: 10.08.2016
(51) Int. Cl.: G01G 19/08

(54) **KRAFTFAHRZEUG UND VERFAHREN ZUR ERMITTLUNG EINER RADAUFSTANDSKRAFT FÜR JEDES RAD EINES KRAFTFAHRZEUGS**
MOTOR VEHICLE AND METHOD FOR DETERMINING A WHEEL CONTACT FORCE FOR EACH WHEEL OF A MOTOR VEHICLE
VEHICULE AUTOMOBILE ET PROCÉDÉ DE DÉTERMINATION D'UNE FORCE D'APPUI D'UNE ROUE POUR CHAQUE ROUE DU VÉHICULE AUTOMOBILE

(30) Priorität: 18.09.2015 DE 102015217916
(43) Veröffentlichungstag der Anmeldung: 22.03.2017
(73) Patentinhaber: Schaeffler Technologies AG & Co. KG, 91074 Herzogenaurach (DE)
(72) Erfinder: Drescher, Thomas, 96193 Wachenroth (DE); Brehm, Horst, 96120 Bischberg (DE)

(56) Entgegenhaltungen:
- EP-A2- 0 611 960
- DE-A1- 10 053 603
- DE-A1-102011 004 028
- DE-B3-102008 046 269

## Beschreibung

Die Erfindung betrifft ein Kraftfahrzeug, aufweisend Räder und eine Vorrichtung zur Ermittlung einer Radaufstandskraft für jedes Rad des Kraftfahrzeugs, wobei das Kraftfahrzeug insbesondere ein Traktor, eine fahrbare Arbeitsmaschine, eine Baumaschine, einen Kran oder dergleichen ist. Daneben betrifft die Erfindung ein Verfahren zur Ermittlung einer Radaufstandskraft.

Im Stand der Technik wurde bereits vorgeschlagen, bei Kraftfahrzeugen, insbesondere mobilen Arbeitsmaschinen, beispielsweise Traktoren, den Reifendruck für die verschiedenen Räder des Kraftfahrzeug an die aktuelle Fahrsituation anzupassen, beispielsweise um die Bodenhaftung und den Kraftstoffverbrauch des Kraftfahrzeugs zu optimieren. Insbesondere ist auch ein optimales Ballastieren des Kraftfahrzeugs, mithin die Einstellung unterschiedlicher Reifendrücke in den verschiedenen Rädern vorgeschlagen worden, um die Bodenhaftung/Ausrichtung des Kraftfahrzeugs zu optimieren.

Beispielsweise ist in DE 10 2009 025 494 A1 ein Verfahren zur Optimierung der lastabhängigen Reifeneinfederung bei Fahrzeugreifen von land- und forstwirtschaftlichen Fahrzeugen vorgeschlagen, wozu im Betrieb des Kraftfahrzeugs ständig die Reifeneinfederung der drehenden Räder gemessen wird und die Messergebnisse mit Sollwerten verglichen werden. Bei Abweichung der Messergebnisse von den Sollwerten um einen einen vorgebbaren Schwellenwert übersteigenden Wert erfolgt eine entsprechende Signalisierung oder automatische Verstellung des Reifeninnendrucks. Das vorgeschlagene Messsystem verwendet einen Sensor, der mittig im Felgenring angeordnet ist und den Abstand zwischen Felgenring und Reifeninnenseite ermittelt. Mithin stellen die Messergebnisse ein Maß für die Radaufstandskraft dar.

Ein Verfahren zum Messen der Reifenlast ist auch aus US 6 799 479 B1 bekannt, wobei auch dort vorgeschlagen wird, das Messsystem unmittelbar auf einer Felge des Rades zu befestigen, um unmittelbar am Rad zu messen. Dokument DE 10 2008 046 269 B3 offenbart ein Verfahren und Messsystem zur Bestimmung einer Radlast welche die für die Veränderungen der Radaufstandskräfte verantwortlichen Einwirkkräfte an deren Einwirkorten (z.b. unter Sitz, Tank) in Betracht zieht.

Die bekannten Möglichkeiten, Messungen zur Reifenlast vorzunehmen, sind jedoch relativ aufwändig und erlauben häufig keine hinreichend präzise Bestimmung der Radaufstandskräfte, da die insbesondere vermessenen Abstände meist auch aufgrund anderer Ursachen, beispielsweise von Fahrbahnunebenheiten, variieren können.

Der Erfindung liegt daher die Aufgabe zugrunde, eine präzise und einfach zu realisierende Möglichkeit zur Bestimmung von Radaufstandskräften in einem Kraftfahrzeug, insbesondere einer mobilen Arbeitsmaschine, anzugeben.

Zur Lösung dieser Aufgabe ist erfindungsgemäß ein Kraftfahrzeug, aufweisend Räder und eine Vorrichtung zur Ermittlung einer Radaufstandskraft für jedes Rad des Kraftfahrzeugs nach Anspruch 1 und Verfahrensanspruch 8 vorgesehen.

Es wird mithin eine Sensordatenfusion vorgeschlagen, um die Radaufstandskräfte durch Berücksichtigung aller gewichtsrelevanten Kraftgrößen (und gegebenenfalls weiteren Informationen) zu bestimmen. Es werden also anstatt Messungen an den Rädern selber die auf das Kraftfahrzeug einwirkenden Kräfte, die in die Radaufstandskraft eingehen, an ihrem Ursprung, also am Einwirkungsort, erfasst.

Soweit die Richtung sich nicht zwangsläufig ergibt, beispielsweise bei in Kraftfahrzeug befindlichen Zusatzlasten wie Kraftstoff oder Insassen, deren Einwirkungskraft eine Gewichtskraft ist, kann auch die Richtung vermessen werden. Dabei kann die Messeinrichtung einen gemeinsamen Sensor oder jeweils einen Sensor zur Messung des Betrags und der Richtung der Einwirkungskraft aufweisen, falls auch eine Richtung vermessen werden muss.

Es können Kraftgrößen an allen relevanten Einwirkungsorten gemessen, werden, also überall da, wo ein Relevanzkriterium erfüllende, beispielsweise in ihren im Betrieb üblichen Beträgen einen Relevanzschwellwert überschreitende, Einwirkungskräfte bei der üblichen Nutzung des Kraftfahrzeugs erwartet werden bzw. regelmäßig auftreten können. So kann ein komplettes Abbild der zusätzlich zu den durch die Kenndaten beschriebenen, relevanten Einwirkungskräfte ermittelt werden, aus welchen sich durch bekannte Berechnungsmethoden unter Kenntnis des geometrischen Aufbaus des Kraftfahrzeugs, beschrieben beispielsweise durch ein mechanisch-geometrisches Modell, die Radaufstandskräfte ermitteln lassen.

Dabei ist es besonders zweckmäßig, wenn in die Berechnung der Radaufstandskräfte auch wenigstens eine die aktuelle Orientierung des Kraftfahrzeugs zur Schwerkraftrichtung und/oder zum Boden beschreibende Orientierungsinformation eingeht, die beispielsweise durch eine Inertialsensorplattform des Kraftfahrzeugs ermittelt werden kann.

Verfahren zur Ermittlung von Kräften in fest verbundenen Systemen, wenn einwirkende Kräfte an Einwirkorten bekannt sind, sind im Stand der Technik bereits beschrieben worden. Lediglich beispielhaft sei auf das Rittersche Schnittverfahren als Möglichkeit verwiesen, wobei selbstverständlich auch andere zulässige Kraftbestimmungsverfahren im Rahmen der Berechnung der Radaufstandskräfte eingesetzt werden können, gegebenenfalls auch zur Ermittlung von Zwischenergebnissen.

Bei dem erwähnten Grundzustand handelt es sich bevorzugt um einen Leerzustand, in dem das Kraftfahrzeug ohne jegliche Zusatzlasten, insbesondere also ohne Insassen, Kraftstoff und/oder aufgehängte Zusatzlasten/angekuppelte Anbaugeräte vorliegt. Dadurch, dass Einwirkungskräfte an den Einwirkungsorten äußerst genau und präzise gemessen werden können, ist auch eine genaue Bestimmung von Radaufstandskräften möglich. Es liegt ein äußerst geringer Installationsaufwand vor, insbesondere dann, wenn ohnehin vorhandene Messeinrichtungen, beispielsweise Sitzplatzsensoren und dergleichen, eingesetzt werden, worauf im Folgenden noch genauer eingegangen werden wird.

Vorzugsweise kann die Steuereinrichtung ferner zur Anpassung des Reifendrucks der Räder in Abhängigkeit der jeweiligen Radaufstandskräfte ausgebildet sein. In diesem Kontext können selbstverständlich auch weitere Informationen berücksichtigt werden, beispielsweise die befahrene Oberfläche beschreibende Umgebungsgrößen und dergleichen, wobei bevorzugt die Anpassung der Reifendrücke im Hinblick auf wenigstens ein Optimierungsziel erfolgt, insbesondere eine optimale Bodenhaftung und/oder einen minimalen Kraftstoffverbrauch. Werden Umgebungsgrößen berücksichtigt, kann beispielsweise auf einer Landstraße ein eher hoher Reifendruck für niedrigen Verbrauch und stabiles Fahrverhalten verwendet werden, während außerhalb von Straßen, insbesondere beispielsweise auf Feldern, ein niedrigerer Reifendruck für die optimale Traktion gewählt werden kann. Aufgrund der erfindungsgemäß gewonnenen, umfassenden Information zur Lastverteilung bzw. Kraftverteilung an und in dem Kraftfahrzeug können optimale Reifendrücke in einer Reifendruckregulierungsfunktion ermittelt und eingestellt werden, wobei insbesondere auch eine optimale Ballastierung des Kraftfahrzeugs möglich ist.

Erfindungsgemäss weist das Kraftfahrzeug wenigstens eine zur Aufhängung von zu bewegenden Lasten und/oder zur Ankupplung eines Anbaugeräts ausgebildete Aufhängevorrichtung auf, wobei die Messeinrichtung zur Messung der an wenigstens einer Lagerstelle der Aufhängevorrichtung angreifenden Einwirkungskräfte angeordnet ist. Insbesondere kann es sich bei der Aufhängevorrichtung bzw. wenigstens einer Aufhängevorrichtung um eine Dreipunktaufhängung handeln. Eine Dreipunktaufhängung, die auch als Dreipunkt-Kraftheber oder Dreipunkt-Hydraulik bezeichnet wird, ist eine zumeist hydraulisch angetriebene Vorrichtung an einem Kraftfahrzeug, insbesondere einer fahrbaren Arbeitsmaschine, beispielsweise an einem Traktor, um ein Anbaugerät bzw. ein Arbeitsgerät anzukuppeln und anzuheben. Die Dreipunkt-Aufhängung kann sowohl an der Rückseite der fahrbaren Arbeitsmaschine, insbesondere des Traktors, als auch an der Vorderseite angebracht sein. Bei einer stabilisierten Dreipunkt-Aufhängung sind drei Aufhängepunkte vorhanden, an denen das Anbaugerät befestigt wird. Üblicherweise umfasst eine an einem Traktor vorgesehene Dreipunkt-Aufhängung zwei tief am Heck des Traktors angebrachte Hebel, die als Unterlenker bezeichnet werden, sowie einen zentralen Oberlenker. Die Unterlenker können direkt oder über einen Hebel durch Hydraulikzylinder angehoben werden. Dem Oberlenker ist ebenfalls ein Hydraulikzylinder zugeordnet, durch dessen Längenänderung eine Neigung des Anbaugeräts eingestellt werden kann. Die Befestigungspunkte des Oberlenkers und der Unterlenker sind häufig als Fanghaken ausgebildet, um ein schnelles Ankoppeln oder Abkoppeln eines Anbaugeräts zu ermöglichen. Ein Anbaugerät kann hierzu einen sogenannten A-Rahmen aufweisen, an dem die Fanghaken eingehängt werden.

Für derartige Aufhängevorrichtungen, insbesondere eine Dreipunktaufhängung, ist es erfindungsgemäß besonders bevorzugt, wenn die Aufhängevorrichtung wenigstens eine Lagerstelle aufweist, welche einen mit einem Sensor der Messeinrichtung versehenen Lagerbolzen aufweist. Es ist, insbesondere bei einer Dreipunktaufhängung, bekannt, an einem Gelenk bzw. einer Lagerstelle einen einen Sensor aufweisenden Lagerbolzen einzusetzen, insbesondere einen sogenannten Kraftmessbolzen. Ein derartiger Kraftmessbolzen umfasst ein Sensorelement, das beispielsweise auf dem magnetoelastischen Messprinzip basieren kann. Das Sensorelement umfasst dann eine Primärspule, die ein Magnetfeld erzeugt. Wenn der Kraftmessbolzen durch eine Zugkraft oder eine Druckkraft beaufschlagt wird, verändern sich die magnetischen Eigenschaften des Materials, wodurch das Magnetfeld verändert wird. Diese Veränderung kann gemessen werden und ist ein Maß für die angreifende Kraft, so dass Sensoren an Kraftmessbolzen besonders zweckmäßig im Rahmen der vorliegenden Erfindung als Teil einer Messeinrichtung eingesetzt werden können.

Eine auch im Rahmen der vorliegenden Erfindung besonders vorteilhafte Dreipunktaufhängung mit solchen Kraftmessbolzen wurde in der nachveröffentlichten deutschen Patentanmeldung mit der Anmeldenummer 10 2015 214 855, die hiermit durch Bezugnahme in den Offenbarungsgehalt dieser Beschreibung aufgenommen wird, beschrieben, wobei dort zur robusten und störungsfreien Erfassung einer angreifenden Kraft besonders vorteilhaft vorgesehen ist, dass der Sensor axial oder radial oder schräg zur Axial- und Radialrichtung an oder in dem Lagerbolzen angeordnet ist. Eine derartige Ausgestaltung ist auch im Rahmen der vorliegenden Erfindung besonders nützlich.

Dabei sind verschiedene Varianten denkbar, die eine Anpassung der Anordnung des Lagerbolzens bzw. des wenigstens einen Sensors an unterschiedliche Kraftrichtungen ermöglichen. Für jeden Anwendungsfall kann auf diese Weise eine optimale Position des oder der Sensoren bestimmt werden. Die in der nachveröffentlichten deutschen Patentanmeldung mit der Anmeldenummer 10 2015 214 855 beschriebene Erfindung beruht auf der Erkenntnis, dass eine besonders zuverlässige Messung von Kräften, insbesondere von entlang einer Wirkungslinie angreifenden Kräften, möglich ist, indem der in oder an dem Lagerbolzen angeordnete Sensor, gegebenenfalls die mehreren Sensoren, so angeordnet ist oder sind, dass sie auf die gewünschte Messrichtung abgestimmt sind. Bei der gewünschten Messrichtung kann es sich beispielsweise um die Wirkungslinie einer Kraft handeln. Bei der dort beschriebenen Dreipunktaufhängung kann der Sensor des Lagerbolzens direkt in dem Kraftpfad mit maximaler Belastung angeordnet sein. Dieser befindet sich auf der Wirkungslinie der angreifenden Kraft. Es ist daher ausreichend, eine während des Betriebs in einer bestimmten Richtung angreifende Kraft zumindest näherungsweise zu kennen, um daraus Kraftkomponenten abzuleiten. Beispielsweise kann eine angreifende Kraft, also eine Einwirkungskraft, in einen radialen und einen axialen Anteil zerlegt werden.

Ein Sensor, der in einem Lagerbolzen einer solchen Dreipunktaufhängung oder allgemein im Rahmen der vorliegenden Erfindung in einer Aufhängevorrichtung eingesetzt werden kann, kann ein dehnungs- oder druckempfindliches Element der folgenden Gruppe sein: Dehnungsmessstreifen (DMS), Dünnschicht-DMS, Piezo-Element, Piezo-Folie, Faser-Bragg-Gitter, polymerer optischer Fasersensor, Kraftmessdose. Auch eine Kombination von mehreren erwähnten Sensoren ist möglich.

Eine Weiterbildung für an Kraftmessbolzen vorgesehene Sensoren der Messeinrichtung sieht vor, dass an oder in dem Lagerbolzen ein weiterer Sensor um 90° gedreht zu dem ersten Sensor angeordnet ist, der ebenso Teil der Messeinrichtung ist. Bei dieser Ausgestaltung befinden sich beide Sensoren auf derselben Ebene, wobei die beiden Sensoren um 90° zueinander gedreht angeordnet sind. Eine derartige Anordnung ermöglicht eine Temperaturkompensation eines Sensors, insbesondere eines Dehnungsmessstreifens. In ähnlicher Weise kann an oder in dem Lagerbolzen der Aufhängevorrichtung eine vier Sensoren umfassende Messbrücke angeordnet sein. Derartige Messbrücken, die auch als Vollbrücken bezeichnet werden, ermöglichen eine besonders genaue Erfassung einer Dehnung anhand von Widerstandsänderungen. Diese Dehnung ist proportional zu der einwirkenden Kraft, die die Dehnung verursacht. Sofern zusätzlich eine Querschnittsfläche berücksichtigt wird, auf der die Kraft wirkt, kann eine auf den Lagerbolzen wirkende Spannung berechnet werden.

Eine weitere bevorzugte Ausbildung sieht vor, dass der wenigstens eine Sensor an oder auf einer abgeschrägten Fläche des Lagerbolzens angeordnet ist, die zur Messrichtung des Sensors und somit zur Wirkungslinie der angreifenden Kraft ausgerichtet ist. Besonders bevorzugt wird es dabei, dass die abgeschrägte Fläche parallel zur Wirkungslinie der Kraft ausgerichtet ist oder dass die Wirkungslinie entlang der abgeschrägten Fläche verläuft. Auf diese Weise kann eine besonders exakte Messung einer Dehnung entlang der Wirkungslinie erfolgen. Mittels des bekannten Elastizitätsmoduls des Werkstoffs des Lagerbolzens kann anhand der erfassten Dehnung die Einwirkungskraft bestimmt werden. Typischerweise besteht der Lagerbolzen aus einer Stahllegierung.

Besonders vorteilhaft ist es auch denkbar, dass das Messelement mehrere in parallelen Ebenen angeordnete Sensoren aufweist. Auf diese Weise kann die Winkellage der Wirkungslinie der Einwirkungskraft, mithin deren Richtung, in Bezug auf eine Bezugsrichtung oder eine Bezugsebene bestimmt werden. So ist eine äußerst genaue Erfassung der Richtung zusätzlich zum Betrag der Einwirkungskraft möglich.

In diesem Zusammenhang kann es vorgesehen sein, dass ein Lagerbolzen mit einer zur Axialrichtung parallelen Ebene mit orthogonal druckbeaufschlagbaren Sensoren versehen ist, wobei der Lagerbolzen zweiteilig ausgebildet ist und ein erstes, die parallele Ebene aufweisendes Teil und ein zweites, dazu komplementäres Teil aufweist, und wobei die Sensoren zwischen den beiden Teilen angeordnet sind. Auch bei dieser Ausgestaltung sind unterschiedliche Kombinationen verschiedener Messebenen und Sensoren möglich, um eine separate Erfassung von Kraftkomponenten der Einwirkungskraft bzw. eine gewünschte Trennung von Kraftkomponenten der Einwirkungskraft zu ermöglichen.

Der Lagerbolzen, der das erste und das zweite Teil aufweist, kann in der Mitte, entlang einer Symmetrieebene geteilt sein, so dass die Sensoren mittig angeordnet sind. Andererseits kann der Lagerbolzen auch exzentrisch geteilt sein, so dass ein Teil größer ist als das andere Teil. Bei dieser Ausgestaltung werden die Sensoren außermittig orthogonal belastet.

Ferner kann zweckmäßig ein Mittel zum Nachführen einer Messebene des Sensors der Messeinrichtung vorgesehen sein, wobei das Mittel dazu ausgebildet ist, den Sensor in eine Position zu bewegen, in der das Sensorsignal maximal ist. Vorzugsweise kann der Sensor dazu rotatorisch oder translatorisch bewegt werden. Indem ein Bewegungsbereich des Sensors durchfahren wird, kann diejenige Position ermittelt werden, in der das Sensorsignal maximal ist, wodurch die Wirkungslinie der angreifenden Einwirkungskraft bestimmt werden kann.

Weniger bevorzugt kann es im Rahmen der vorliegenden Erfindung alternativ, falls eine Vermessung an der Aufhängevorrichtung nicht vorgesehen ist, vorgesehen sein, dass die Steuereinrichtung zum Erhalt von das Gewicht eines angekuppelten Anbaugeräts beschreibenden Fremddaten über eine Kommunikationsverbindung mit dem Anbaugerät und zur Berücksichtigung der Fremddaten bei der Berechnung der Radaufstandskräfte ausgebildet ist. In diesem Fall teilen die Anbaugeräte über eine Kommunikationsverbindung, insbesondere umfassend den Fahrzeugbus/ISO-Bus, ihr Gewicht mit, insbesondere als ihr Ursprungsgewicht und ihren Füllstand/Betriebszustand. Auch auf diese Weise kann auf die Einwirkungskraft an der entsprechenden Aufhängevorrichtung bzw. deren Einwirkungspunkten gefolgert werden, so dass die Berechnung der Radaufstandskräfte ermöglicht wird. Allerdings liefert eine Messung, insbesondere unter Verwendung eines Kraftmessbolzens, ein deutlich präziseres Ergebnis, so dass dies entsprechend bevorzugt wird.

Dabei sei insbesondere bereits in diesem Zusammenhang angemerkt, dass bei einer Messeinrichtung, die Sensoren in oder an Lagerbolzen umfasst, mithin Kraftmessbolzen nutzt, eine besonders einfache Nachrüstung möglich ist, da nur die bislang vorhandenen Lagerbolzen durch die entsprechenden Kraftmessbolzen ersetzt werden müssen.

Eine bevorzugte Weiterbildung der Erfindung sieht ferner vor, dass das Kraftfahrzeug als Messeinrichtung wenigstens einen wenigstens einem Sitzplatz des Kraftfahrzeugs zugeordneten Sitzplatzsensor zur Erfassung einer eine Insassengewichtskraft beschreibenden Kraftgröße aufweist. Auf diese Art und Weise ist es mithin möglich, Insassengewichte, bei fahrbaren Arbeitsmaschinen, in denen meist lediglich ein Fahrersitz vorgesehen ist, mithin das Fahrergewicht, aus den Sensordaten des Sitzplatzsensors zu ermitteln. Derartige Sitzplatzsensoren sind in vielen Kraftfahrzeugen bereits verbaut, beispielsweise, um Einstellungen nachzuführen, eine Belegung zu erkennen und dergleichen.

Ferner ist es zweckmäßig, wenn wenigstens eine der wenigstens einen Messeinrichtung einen eine Kraftstoffmenge in einem Tank des Kraftfahrzeugs erfassenden Füllstandsensor aufweist. Ist die Dichte des Kraftstoffs bekannt, so ergibt sich leicht die Masse an vorhandenem Kraftstoff und somit auch die von diesem zusätzlich zu einem Grundzustand mit leerem Tank verursachte Gewichtskraft als Einwirkungskraft.

Ersichtlich nutzt also das erfindungsgemäße Vorgehen allerlei Sensoren als bzw. in Messeinrichtungen, die ohnehin bereits am Kraftfahrzeug vorgesehen sind, so dass die erfindungsgemäße Ausgestaltung äußerst einfach zu realisieren ist. Auch Sensoren an Aufhängevorrichtungen, insbesondere Kraftmessbolzen, können ohnehin bereits vorhanden sein; diese lassen sich aber auch, wie dargelegt wurde, besonders einfach nachrüsten, so dass insgesamt eine besonders einfache Realisierung der vorliegenden Erfindung gegeben ist.

Es sei an dieser Stelle noch angemerkt, dass die Kenndaten, die beispielsweise als ein Kraftfahrzeugmodell vorliegen können, mit Konstruktion des Kraftfahrzeugs üblicherweise bereits bekannt sind, wobei das Gewicht des Kraftfahrzeugs im Grundzustand beispielsweise anhand einer Waage ermittelt bzw. bestätigt werden kann. Idealerweise gibt das Kraftfahrzeugmodell an, wie sich Kräfte innerhalb des Kraftfahrzeugs verteilen können, insbesondere also die relativen Positionen und starren Verbindungen zwischen den Einwirkungspunkten bzw. Einwirkungsorten und den Rädern.

Wie bereits dargelegt wurde, lässt sich die vorliegende Erfindung besonders vorteilhaft auf fahrbare Arbeitsmaschinen anwenden, insbesondere auf Traktoren. Mithin kann das Kraftfahrzeug entsprechend ausgebildet sein.

Neben dem Kraftfahrzeug betrifft die Erfindung auch ein Verfahren zur Ermittlung einer Radaufstandskraft für jedes Rad eines erfindungsgemäßen Kraftfahrzeugs, welches folgende Schritte aufweist:
- Messung wenigstens einer eine aktuell auf das Kraftfahrzeug gegenüber einem Grundzustand verändert wirkenden Einwirkungskraft an dem Einwirkungsort in Richtung und Betrag beschreibenden Kraftgröße mit der wenigstens einen Messeinrichtung, und
- Berechnen der Radaufstandskraft aus der wenigstens einen Kraftgröße, dem Einwirkungsort und wenigstens das Gewicht und den geometrischen Aufbau des Kraftfahrzeugs beschreibenden Kenndaten des Kraftfahrzeugs durch die Steuereinrichtung.

Sämtliche Ausführungen bezüglich des erfindungsgemäßen Kraftfahrzeugs lassen sich analog auf das erfindungsgemäße Verfahren übertragen, so dass auch mit diesem die bereits genannten Vorteile erhalten werden können.

Die Erfindung wird nachfolgend anhand von Ausführungsbeispielen unter Bezugnahme auf die Zeichnungen erläutert. Die Zeichnungen sind schematische Darstellungen und zeigen:
- Figur 1: eine Prinzipskizze eines erfindungsgemäßen Kraftfahrzeugs,
- Figur 2: eine Dreipunktaufhängung des Kraftfahrzeugs in einer perspektivischen Ansicht,
- Figur 3: eine Lagerstelle der Dreipunktaufhängung in einer geschnittenen Ansicht,
- Figur 4: ein in einen Lagerbolzen einsetzbares Messelement,
- Figur 5: auf ein als Traktor ausgebildetes Kraftfahrzeug einwirkende Kräfte, und
- Figur 6: Kräfte an der Dreipunktaufhängung in einer schematischen Darstellung.

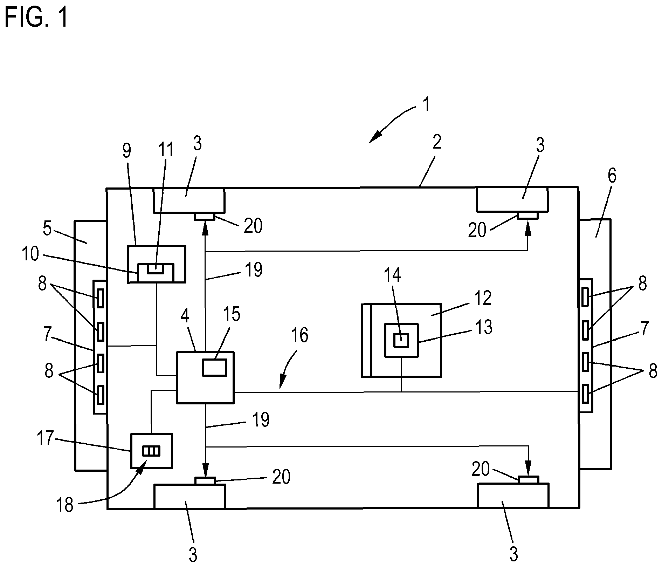

Figur 1 zeigt eine Prinzipskizze eines erfindungsgemäßen Kraftfahrzeugs 1, das vorliegend als ein Traktor 2 ausgebildet ist. Das Kraftfahrzeug 2 weist vier Räder 3 auf, deren Radaufstandskraft durch eine Steuereinrichtung 4 ermittelt werden soll. Die Steuereinrichtung 4 ist mithin zur Durchführung des erfindungsgemäßen Verfahrens ausgebildet.

An seiner Vorderseite und an seiner Rückseite weist das Kraftfahrzeug 1 ferner eine Aufhängevorrichtung 5, 6 auf, um ein Anbaugerät oder allgemein Lasten anzukuppeln. Vorliegend sind beide Aufhängevorrichtungen 5, 6 als Dreipunktaufhängungen ausgebildet, die hydraulisch betreibbar sind.

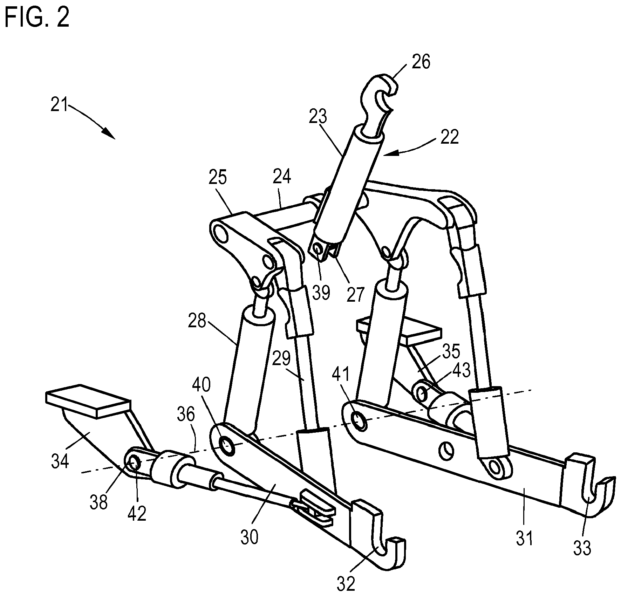

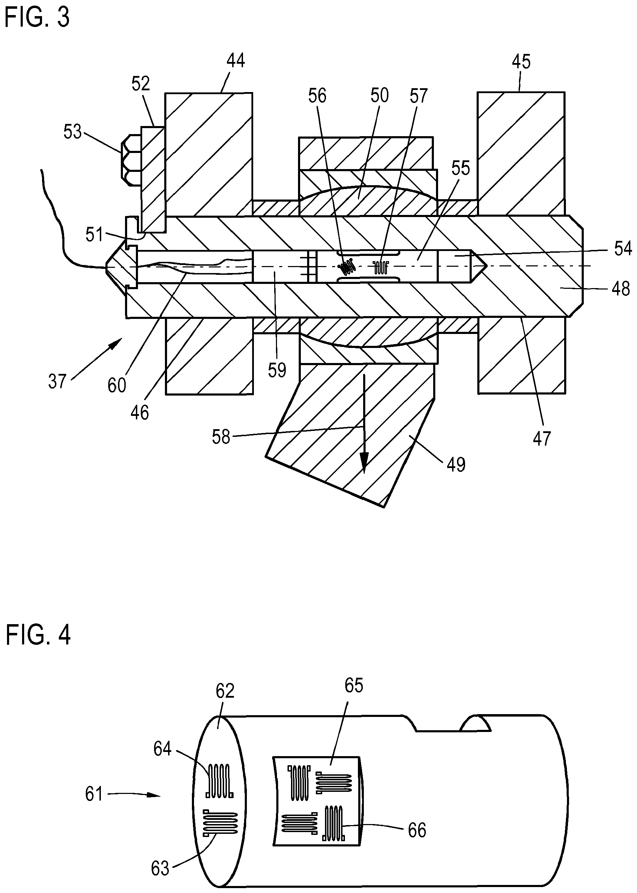

Um die durch angekuppelte Lasten auf das Kraftfahrzeug 1 einwirkenden Einwirkungskräfte ermitteln zu können, sind die Aufhängevorrichtungen 5, 6 jeweils mit einer Messvorrichtung 7 versehen, die mehrere Sensoren 8 aufweist. Wie hinsichtlich der Darstellung in Fig. 2 und 3 erläutert werden wird, ist dabei Lagerstellen der Dreipunktaufhängung ein Sensor 8 zugeordnet, die so gewählt sind, dass die insgesamt auf das Kraftfahrzeug an wenigstens einem insbesondere durch Fanghaken bestimmten Einwirkungspunkt der Aufhängevorrichtung 5, 6 als allgemeiner Einwirkungsort auftretenden Einwirkungskräfte bestimmt werden können.

Weitere veränderliche Einwirkungskräfte können bei dem Kraftfahrzeug 1 auch von einem Kraftstofftank 9 ausgehen, abhängig von der Menge des dort vorhandenen Kraftstoffs. Auch der Kraftstofftank 9 ist vorliegend mit einer Messeinrichtung 10 versehen, die hier einen Füllstandssensor 11 aufweist. Ist die Dichte des Kraftstoffs bekannt, lässt sich hieraus leicht die vorhandene Kraftstoffmasse und somit die die von dem Kraftstoff ausgeübte Gewichtskraft als Einwirkungskraft ermitteln.

Nachdem das Kraftfahrzeug ferner einen Fahrersitz 12 aufweist, auf dem ein Insasse Platz nehmen kann, der ebenso eine Einwirkungskraft auf das Kraftfahrzeug 1 erzeugen kann, weist auch der Sitz 12 vorliegend eine Messeinrichtung 13 mit einem bzw. als ein Sitzplatzsensor 14 auf, über den nicht nur eine Belegung des Sitzplatzes 12, sondern auch ein Gewicht des darauf platzierten Insassen, hier des Fahrers, vermessen werden kann.

Die von den Messeinrichtungen 7, 10 und 13 gemessenen Einwirkungskräfte, die durch Kraftgrößen in Richtung und Betrag beschrieben sind, werden der Steuereinrichtung 4 zur Verfügung gestellt, wozu ein hier nur angedeutetes Bussystem 16 des Kraftfahrzeugs 1 genutzt werden kann. Die Steuereinrichtung 4 weist eine Speichereinrichtung 15 auf, in der den geometrischen Aufbau des Kraftfahrzeugs und dessen Gewicht beschreibende Kenndaten gespeichert sind. Die Kenndaten geben nicht nur die relevanten Einwirkungspunkte der Einwirkungskräfte, die durch die Kraftgrößen beschrieben sind, an, sondern auch das Gewicht des Kraftfahrzeugs 1 in einem Grundzustand, hier ohne angekoppelte Lasten an den Aufhängevorrichtungen 5, 6 und ohne Kraftstoff/Insassen. Das Gewicht kann beispielsweise durch Wiegen festgestellt werden. Insgesamt bilden die Kenndaten ein mechanisch-geometrisches Kraftfahrzeugmodell, dem auch zu entnehmen ist, wie sich Kräfte aufgrund der Konstruktion des Kraftfahrzeugs 1 verteilen.

Die Steuereinrichtung 4 ist nun dazu ausgebildet, aus den Kraftgrößen und den Kenndaten die Radaufstandskräfte für alle Räder 3 zu bestimmen. Hierzu werden übliche, für mechanische Berechnungen bekannte Zusammenhänge von Kräften in starr verbundenen Systemen eingesetzt, wobei das starr verbundene System des Kraftfahrzeugs 1 hier, wie beschrieben, durch die Kenndaten abgebildet wird und bekannt ist. Zweckmäßig geht in die Berechnung der Radaufstandskräfte auch eine Orientierung des Kraftfahrzeugs 1 ein, die von einer Inertialplattform 17 mit Inertialsensoren 18 geliefert wird. Als Beispiel für ein Verfahren, das zur Ermittlung der Radaufstandskräfte eingesetzt werden kann, sei vorliegend auf das Rittersche Schnittverfahren verwiesen. Sind die Radaufstandskräfte erst bekannt, kann mit weiteren, der Steuereinrichtung 4 aus anderen Quellen über den Fahrzeugbus 16 zur Verfügung gestellten Umgebungsgrößen, insbesondere einer das befahrene Gelände beschreibenden Geländegröße, die beispielsweise durch Umgebungssensoren und/oder sonstige Umgebungsdaten gewonnen werden können, ein optimaler Reifendruck für jedes der Räder 3 ermittelt werden. Die Optimierung stelle dabei auf optimale Bodenhaftung und/oder optimale Ballastierung ab. Die ermittelten Sollgrößen für den Reifendruck, die beispielsweise in einem Optimierungsverfahren bestimmt werden können, werden über Steuerleitungen 19, die auch vom Bussystem 16 zur Verfügung gestellt werden können, an Aktoren 20 weitergegeben, die jeweils einem Rad 3 zugeordnet sind. Über die Aktoren 20 wird der Reifendruck entsprechend der Sollgröße eingestellt.

Figur 2 zeigt eine Dreipunktaufhängung 21 in einer perspektivischen Ansicht, umfassend einen Oberlenker 22 mit einem Hubzylinder 23. Der Hubzylinder 23 ist an einer Querstrebe 24 eines Hubarms 25 angebracht. An beiden Seiten des Hubarms 25 sind jeweils ein Hubzylinder 28 und eine höhenverstellbare Hubstange 29 angebracht. Sowohl der Hubzylinder 28 als auch die Hubstange 29 sind jeweils mit einem Unterlenker 30, 31 verbunden, an deren Ende sich jeweils ein Fanghaken 32, 33 befindet. Jedem Unterlenker 30, 31 ist eine Stütze 34, 35 zugeordnet, die am Heck des Traktors 2 befestigt ist.

Die an den Unterlenkern 30, 31 angeordneten Fanghaken 32, 33 bilden die unteren Punkte der Dreipunktaufhängung 21. Der an dem Oberlenker 22 angebrachte Fanghaken 26 bildet den oberen Punkt der Dreipunktaufhängung 21. Mittels der Fanghaken 26, 32, 33 kann ein Anbaugerät angekoppelt werden. Durch eine Betätigung der Hubzylinder 28 können die beiden Unterlenker 30, 31 angehoben und um eine Drehachse 36 geschwenkt werden. Die Drehachse 36 ist in Figur 2 schematisch als strichpunktierte Linie eingezeichnet. Durch eine Betätigung des Hubzylinders 23 des Oberlenkers 22 kann die Neigung eines an die Dreipunktaufhängung 21 angekoppelten Anbaugeräts verändert werden.

Die in Figur 2 gezeigte Dreipunktaufhängung 21 weist mehrere Lagerstellen auf, an denen zwei Komponenten gelenkig miteinander verbunden sind, wodurch die beschriebene Kinematik ermöglicht wird. Im Einzelnen befindet sich eine erste Lagerstelle an einem Gelenk 27 des Oberlenkers 22. Das Gelenk 27 verbindet den Hubzylinder 23 mit dem Traktor 2. Weitere Lagerstellen koppeln das untere Ende der Hubzylinder 28 mit den Unterlenkern 30, 31. Daneben weisen auch die beiden seitlichen Stützen 34, 35 jeweils eine gelenkige Lagerstelle 38 auf. An allen erwähnten Lagerstellen ist ein Lagerbolzen angeordnet, der einen Sensor 8 aufweist, der zum Erfassen einer Einwirkungskraft ausgebildet ist. Somit befindet sich ein erster Lagerbolzen 39 im Bereich des Gelenks 27 am unteren Ende des Oberlenkers 22. Die beiden Unterlenker 30, 31 sind mittels Lagerbolzen 40, 41 mit dem jeweiligen Hubzylinder 28 gekoppelt. Zusätzlich weist jede Stütze 34, 35, die zur seitlichen Abstützung dient, einen Lagerbolzen 42, 43 auf. Jeder Lagerbolzen 30, 40, 41, 42, 43 ist über elektrische Leitungen (nicht dargestellt) mit der Steuereinrichtung 4 verbunden, wobei auch eine wenigstens teilweise drahtlose Datenübertragung denkbar ist. Mittels der Lagerbolzen 39 - 43 ist es möglich, die an den einzelnen Lagerstellen wirkenden Kräfte zu erfassen und daraus die effektiv die Radaufstandskräfte an den Rädern 3 beeinflussenden Einwirckräfte in Richtung und Betrag zu erfassen, mithin die benötigten Kraftgrößen an die Steuereinrichtung 4 zu liefern.

Es sei darauf hingewiesen, dass die Sensoren 8 selbstverständlich auch anderen Zwecken zusätzlich dienen können, das bedeutet, die Steuereinrichtung 4 kann ihre Sensordaten bzw. die Kraftgrößen auch anderweitig verwerten, beispielsweise zu einer verbesserten Ansteuerung der Dreipunktaufhängung 21 an sich. Dann kann beispielsweise das Bewegen eines angehängten Anbaugeräts bzw. Arbeitsgeräts gezielt in Abhängigkeit der wirkenden Kräfte erfolgen.

Ferner sei darauf hingewiesen, dass selbstverständlich auch an anderen Lagerstellen als den hier Genannten mit Sensoren 8 versehene Lagerbolzen ("Kraftmessbolzen") vorgesehen werden können, um die Einwirkkräfte anderweitig und/oder genauer bestimmen zu können.

Figur 3 zeigt eine Lagerstelle 37 einer Dreipunktaufhängung. Die Lagerstelle 37 umfasst zwei voneinander beabstandete Lagerböcke 44, 45 als Bestandteil einer Dreipunktaufhängung, die fest an dem Traktor 2 angeordnet sind. Die beiden Lagerböcke 44, 45 weisen fluchtende Bohrungen 46, 47 auf, deren Verbindungslinie eine Drehachse definiert. Ein Lagerbolzen 48 durchsetzt die Bohrungen 46, 47. Der Lagerbolzen 48 verbindet einen Arm 49 eines Anbaugeräts mit den Lagerböcken 44, 45, wodurch ein Schwenklager gebildet wird. Dazu durchsetzt der zylindrische Lagerbolzen 48 ein Gleitlager 50 des Arms 49. An einem Ende weist der Lagerbolzen 48 eine radiale Ausnehmung 51 auf, in die eine Platte 52, die durch eine Schraube 53 gesichert ist, eingreift. Die Schraube 53 ist mit dem Lagerbock 44 verschraubt und verhindert ein Lösen und Verdrehen des Lagerbolzens 48. Der Lagerbolzen 48 ist in dem dargestellten Ausführungsbeispiel in die Bohrungen 46, 47 eingepresst. Es sind jedoch auch andere Ausführungen denkbar, bei denen der Lagerbolzen eingeschraubt, eingeschrumpft, eingenietet, eingeklebt oder eingeschweißt ist. In der geschnittenen Ansicht von Figur 3 erkennt man, dass der Lagerbolzen 48 teilweise hohl ausgebildet ist. In einem Hohlraum 54 ist ein Messelement 55 angeordnet, das Sensoren 56, 57 als spezielle Ausführungen der Sensoren 8 aufweist. In dem dargestellten Ausführungsbeispiel handelt es sich bei den Sensoren 56, 57 um Dehnungsmessstreifen, die zueinander verdreht angeordnet sind. Das Messelement 55 ist in diesem Ausführungsbeispiel als Zylinder ausgebildet, die Sensoren 56, 57 befinden sich somit auf der Außenseite des zylindrischen Messelements 55 und berühren die Innenfläche des Hohlraums 54. Daher kann eine in Richtung des Pfeils 58 wirkende Kraft, die somit senkrecht zum Lagerbolzen 48 gerichtet ist, mittels des die Sensoren 56, 57 aufweisenden Messelements 55 erfasst werden.

Das Messelement 55 und dessen Sensoren 56, 57 sind an ein Elektronikmodul 59 angeschlossen, das zur Signalwandlung dient. Über elektrische Leitungen 60 ist das Messelement 55 mit der Steuereinrichtung 4 verbunden.

Das in Figur 3 gezeigte Messelement 55, das in das Innere des Lagerbolzens 48 integriert ist, ist ein Beispiel für die Positionierung von Sensoren 5 in einem Lagerbolzen. Nachfolgend wird ein weiteres Beispiel für einen Lagerbolzen beschrieben, wobei die Sensoren insgesamt an unterschiedlichen Stellen und in unterschiedlichen Anordnungen an oder in dem Lagerbolzen angeordnet sein können. Für weitere Ausführungsbeispiele wird auf die bereits erwähnte, nachveröffentlichte deutsche Patentanmeldung mit der Anmeldenummer 10 2015 214 855 verwiesen, welche durch Bezugnahme hinsichtlich der konkrete Anordnungen und Ausbildungen für Lagerbolzen beschreibenden Ausführungsbeispiele in den hiesigen Offenbarungsgehalt aufgenommen wird.

Figur 4 zeigt beispielhaft ein weiteres Ausführungsbeispiel eines Messelements 61, bei dem auf der Stirnfläche 62 zwei um 90° zueinander versetzte Sensoren 63, 64 angeordnet sind. Zusätzlich sind auf einer inneren Ebene 65 insgesamt vier Sensoren 66 in zwei Reihen und zwei Spalten angeordnet, wobei benachbarte Sensoren 66 um 90° zueinander versetzt sind. Je nach Verschaltung können mit den Sensoren 66 auch Störungen wie Temperatureinflüsse kompensiert oder Lastrichtungen unterschieden werden.

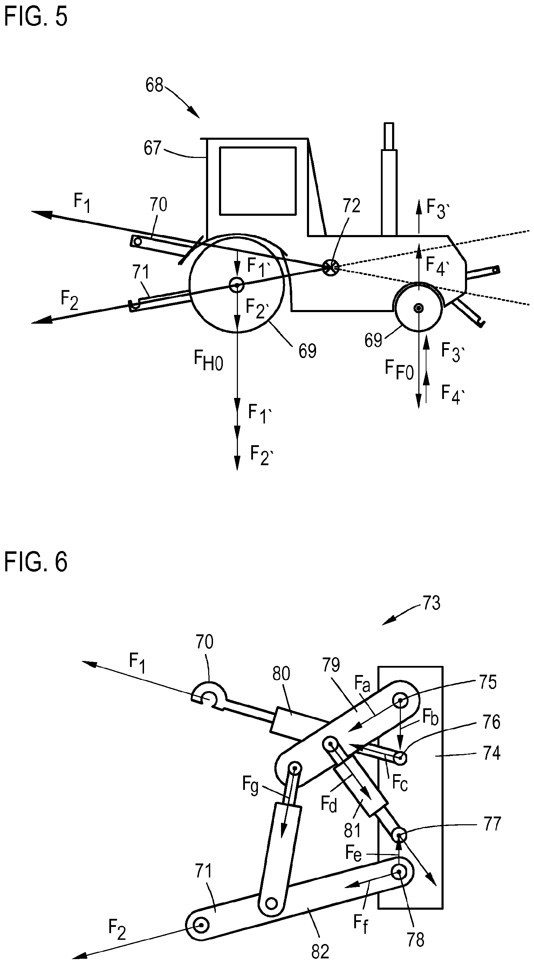

Figur 5 zeigt zur weiteren Erläuterung der Kräfteverhältnisse eine Prinzipskizze eines weiteren als Traktor 67 ausgebildeten erfindungsgemäßen Kraftfahrzeugs 68. Zu sehen sind wiederum die Räder 69 mit den im Grundzustand bestehenden bestehenden Radaufstandskräften F_{H0} und F_{F0}. Wirken nun an den hinteren Fanghaken 70, 71 die Einwirkungskräfte F₁ und F₂, wird die Radaufstandskraft am hinteren Rad 69 um die Anteile F₁' und F₂' erhöht, während am vorderen Rad 69 aufgrund der Lage des Momantanpols 72 die Radaufstandskraft um die Anteile F₃' und F₄' erniedrigt wird, da die Kräfte hier entgegengesetzt der Schwerkraft wirken.

Entsprechend zeigt Figur 6 schematisch die hintere Dreipunktaufhängung 73 des Traktors 67, wobei zudem verschiedene innerhalb der Dreipunktaufhängung 73 wirkende Kräfte Fₐ - F_{g} eingezeichnet sind, die aufgrund der durch das Anbaugerät gegebenen Einwirkungskräfte F₁ und F₂ gegeben sind. Im vorliegenden Ausführungsbeispiel enthält die Messeinrichtung nun in entsprechenden Lagerbolzen an der Befestigung 74 am Traktor 67 vorgesehene Sensoren 75, 76, 77 und 78, das bedeutet, die entsprechenden Lagerbolzen sind als Kraftmessbolzen ausgebildet. Der einseitig oder beidseitig vorgesehene Sensor 75 misst also die eingeleitete Kraft Fₐ über den Hubarm 79 in Betrag und Richtung, der Sensor 76 misst die eingeleitete Kraft F_{c} über den Oberlenker 80 in Betrag und Richtung, der einseitig oder doppelseitig vorgesehene Sensor 77 misst die eingeleitete Kraft Fₑ über den Hubzylinder 81 und der einseitig oder beidseitig vorgesehene Sensor 78 misst die eingeleitete Kraft F_{f} über den Unterlenker 82. Aus Fₐ, F_{c}, Fₑ und F_{f} können nun die Einwirkungskräfte F₁' und F₂' um den Momentanpol 72 bestimmt werden.

### Bezugszeichenliste

- 1: Kraftfahrzeug
- 2: Traktor
- 3: Rad
- 4: Steuereinrichtung
- 5: Aufhängevorrichtung
- 6: Aufhängevorrichtung
- 7: Messvorrichtung
- 8: Sensor
- 9: Kraftstofftank
- 10: Messvorrichtung
- 11: Füllstandsensor
- 12: Sitzplatz
- 13: Messeinrichtung
- 14: Sitzplatzsensor
- 15: Speichereinrichtung
- 16: Fahrzeugbus
- 17: Inertialplattform
- 18: Inertialsensor
- 19: Steuerleitung
- 20: Aktor
- 21: Dreipunktaufhängung
- 22: Oberlenker
- 23: Hubzylinder
- 24: Querstrebe
- 25: Hubarm
- 26: Fanghaken
- 27: Gelenk
- 28: Hubzylinder
- 29: Hubstange
- 30: Unterlenker
- 31: Unterlenker
- 32: Fanghaken
- 33: Fanghaken
- 34: Stütze
- 35: Stütze
- 36: Drehachse
- 37: Lagerstelle
- 38: Lagerstelle
- 39: Lagerbolzen
- 40: Lagerbolzen
- 41: Lagerbolzen
- 42: Lagerbolzen
- 43: Lagerbolzen
- 44: Lagerbock
- 45: Lagerbock
- 46: Bohrung
- 47: Bohrung
- 48: Lagerbolzen
- 49: Arm
- 50: Gleitlager
- 51: Ausnehmung
- 52: Platte
- 53: Schraube
- 54: Hohlraum
- 55: Messelement
- 56: Sensor
- 57: Sensor
- 58: Pfeil
- 59: Elektronikmodul
- 60: Leitung
- 61: Messelement
- 62: Stirnfläche
- 63: Sensor
- 64: Sensor
- 65: Ebene
- 66: Sensor
- 67: Traktor
- 68: Kraftfahrzeug
- 69: Rad
- 70: Fanghaken
- 71: Fanghaken
- 72: Momentanpol
- 73: Dreipunktaufhängung
- 74: Befestigung
- 75: Sensor
- 76: Sensor
- 77: Sensor
- 78: Sensor
- 79: Hubarm
- 80: Oberlenker
- 81: Hubzylinder
- 82: Unterlenker

## Patentansprüche

1. Kraftfahrzeug (1, 68), aufweisend Räder (3, 69) und eine Vorrichtung zur Ermittlung einer Radaufstandskraft für jedes Rad (3, 69) des Kraftfahrzeugs (1, 68) sowie wenigstens eine zur Aufhängung von zu bewegenden Lasten und/oder zur Ankupplung eines Anbaugeräts ausgebildete Aufhängevorrichtung (5, 6), **dadurch gekennzeichnet, dass** das Kraftfahrzeug (1, 68)
- wenigstens eine an einem Einwirkungsort angeordnete Messeinrichtung (7, 10, 13) zur Messung wenigstens einer Kraftgröße, die eine aktuell auf das Kraftfahrzeug (1, 68) gegenüber einem Grundzustand verändert an dem Einwirkungsort wirkende Einwirkungskraft in Richtung und Betrag beschreibt, wobei die Messeinrichtung (7) zur Messung der an wenigstens einer Lagerstelle der Aufhängevorrichtung (5, 6) angreifenden Einwirkungskräfte angeordnet ist, und
- eine zum Berechnen der Radaufstandskraft aus der wenigstens einen Kraftgröße, dem Einwirkungsort und wenigstens das Gewicht und den geometrischen Aufbau des Kraftfahrzeugs (1, 68) beschreibenden Kenndaten des Kraftfahrzeugs (1, 68) ausgebildete Steuereinrichtung (4) umfasst.

2. Kraftfahrzeug nach Anspruch 1, **dadurch gekennzeichnet, dass** die Steuereinrichtung (4) zur Anpassung des Reifendrucks der Räder (3, 69) in Abhängigkeit der jeweiligen Radaufstandskräfte ausgebildet ist.

3. Kraftfahrzeug nach einem der vorangehenden Ansprüche, **dadurch gekennzeichnet, dass** die oder wenigstens eine Aufhängevorrichtung (5, 6) eine Dreipunktaufhängung (21, 73) ist.

4. Kraftfahrzeug nach einem der vorangehenden Ansprüche, **dadurch gekennzeichnet, dass** die Aufhängevorrichtung (5, 6) wenigstens eine insbesondere eine Lagerstelle definierende Lagerstelle (37, 38) aufweist, welche einen mit einem Sensor (8, 56, 57, 63, 64, 66) der Messeinrichtung (7, 10, 13) versehenen Lagerbolzen (19, 20, 21, 22, 23) aufweist.

5. Kraftfahrzeug nach Anspruch 4, **dadurch gekennzeichnet, dass** der Sensor (8, 56, 57, 63, 64, 66) axial oder radial oder schräg zur Axial- und Radialrichtung an oder in dem Lagerbolzen (19, 20, 21, 22, 23) angeordnet ist.

6. Kraftfahrzeug nach einem der vorangehenden Ansprüche, **dadurch gekennzeichnet, dass** als Messeinrichtung (13) wenigstens ein wenigstens einem Sitzplatz (12) des Kraftfahrzeugs (1, 68) zugeordneter Sitzplatzsensor (14) zur Erfassung einer eine Insassengewichtskraft beschreibenden Kraftgröße vorgesehen ist und/oder wenigstens eine der wenigstens einen Messeinrichtung (10) einen eine Kraftstoffmenge in einem Tank (9) des Kraftfahrzeugs (1, 68) erfassenden Füllstandsensor (11) aufweist.

7. Kraftfahrzeug nach einem der vorangehenden Ansprüche, **dadurch gekennzeichnet, dass** es als eine fahrbare Arbeitsmaschine, insbesondere als ein Traktor (2, 67), ausgebildet ist.

8. Verfahren zur Ermittlung einer Radaufstandskraft für jedes Rad (3, 69) eines Kraftfahrzeugs (1, 68) nach einem der vorangehenden Ansprüche, **dadurch gekennzeichnet, dass** das Verfahren die folgenden Schritte umfasst:
- Messung wenigstens einer Kraftgröße, die eine aktuell auf das Kraftfahrzeug (1, 68) gegenüber einem Grundzustand verändert an dem Einwirkungsort wirkenden Einwirkungskraft in Richtung und Betrag beschreibt, mit der wenigstens einen Messeinrichtung (7, 10, 13), wobei die Messeinrichtung (7) zur Messung der an wenigstens einer Lagerstelle der Aufhängevorrichtung (5, 6) angreifenden Einwirkungskräfte angeordnet ist, und
- Berechnen der Radaufstandskraft aus der wenigstens einen Kraftgröße, dem Einwirkungsort und wenigstens das Gewicht und den geometrischen Aufbau des Kraftfahrzeugs (1, 68) beschreibenden Kenndaten des Kraftfahrzeugs (1, 68) durch die Steuereinrichtung (4).

## Claims

1. A motor vehicle (1, 68), comprising wheels (3, 69) and a device for determining a wheel contact force for each wheel (3, 69) of the motor vehicle (1, 68) and at least one suspension device (5, 6) for suspending loads to be moved and/or for coupling a trailer device, **characterised in that** the motor vehicle (1, 68)
- comprises at least one measuring device (7, 10, 13) arranged at an action point for measuring at least one force variable which describes the direction and magnitude of an action force currently acting on the motor vehicle (1, 68) at the action point, modified with respect to an initial state, the measurement device (7) being arranged for measuring the action forces acting on at least one bearing point of the suspension device (5, 6), and
- a control device (4) designed to calculate the wheel contact force from the at least one force variable, the point of action and characteristic data of the motor vehicle (1, 68) that describe at least the weight and the geometric structure of the motor vehicle (1, 68).

2. The motor vehicle according to claim 1, **characterised in that** the control device (4) is designed to adapt the tyre pressure of the wheels (3, 69) as a function of the respective wheel contact forces.

3. The motor vehicle according to any one of the preceding claims, **characterised in that** the or at least one suspension device (5, 6) is a three-point suspension (21, 73).

4. The motor vehicle according to any one of the preceding claims, **characterised in that** the suspension device (5, 6) has at least one bearing point (37, 38), in particular defining a bearing point, which has a bearing pin (19, 20, 21, 22, 23) provided with a sensor (8, 56, 57, 63, 64, 66) of the measuring device (7, 10, 13).

5. The motor vehicle according to claim 4, **characterised in that** the sensor (8, 56, 57, 63, 64, 66) is arranged axially or radially or obliquely to the axial and radial direction on or in the bearing pin (19, 20, 21, 22, 23).

6. The motor vehicle according to any one of the preceding claims, **characterised in that** at least one seat sensor (14) assigned to at least one seat (12) of the motor vehicle (1, 68) is provided as the measuring device (13) for detecting a force variable describing an occupant weight force, and/or at least one of the at least one measuring devices (10) has a fill level sensor (11) which detects a fuel quantity in a tank (9) of the motor vehicle (1,68).

7. The motor vehicle according to any one of the preceding claims, **characterised in that** said motor vehicle is designed as a mobile working machine, in particular as a tractor (2, 67).

8. A method for determining a wheel contact force for each wheel (3, 69) of a motor vehicle (1, 68) according to any one of the preceding claims, **characterised in that** the method comprises the following steps:
- measuring at least one force variable which describes the direction and magnitude of an action force that is currently acting on the motor vehicle (1, 68) at the action point, modified in relation to an initial state, with the at least one measuring device (7, 10, 13), the measuring device (7) being arranged to measure the action forces acting on at least one bearing point of the suspension device (5, 6), and
- using the control device (4) to calculate the wheel contact force from the at least one force variable, the point of action and characteristic data of the motor vehicle (1, 68) that describe at least the weight and the geometric structure of the motor vehicle (1, 68).

## Revendications

1. Véhicule à moteur (1, 68), comprenant des roues (3, 69) et un dispositif de détermination d'une force d'appui de roue pour chaque roue (3, 69) du véhicule à moteur (1, 68) ainsi qu'au moins un dispositif de suspension (5, 6) conçu pour suspendre des charges à déplacer et/ou pour atteler un élément rapporté, **caractérisé en ce que** le véhicule à moteur (1, 68)
- comprend au moins un dispositif de mesure (7, 10, 13) disposé en un lieu d'action pour mesurer au moins une grandeur de force, laquelle décrit la direction et la valeur d'une force d'action s'exerçant actuellement sur le véhicule à moteur (1, 68), modifiée par rapport à un état de base, au lieu d'action, dans lequel ledit dispositif de mesure (7) est conçu pour mesurer les forces d'action agissant sur au moins un point d'appui du dispositif de suspension (5, 6), et
- comprend un dispositif de commande (4) conçu pour calculer la force d'appui de roue à partir d'au moins une grandeur de force, du lieu d'action et d'au moins des données de caractéristique du véhicule à moteur (1, 68) décrivant le poids et la structure géométrique du véhicule à moteur (1,68).

2. Véhicule à moteur selon la revendication 1, **caractérisé en ce que** le dispositif de commande (4) est conçu pour adapter la pression des pneus des roues (3, 69) en fonction des forces d'appui de roue respectives.

3. Véhicule à moteur selon l'une quelconque des revendications précédentes, **caractérisé en ce que** l'au moins un dispositif de suspension (5, 6) est une suspension à trois points (21, 73).

4. Véhicule à moteur selon l'une quelconque des revendications précédentes, **caractérisé en ce que** le dispositif de suspension (5, 6) comporte au moins un point d'appui (37, 38), en particulier définissant un point d'appui, lequel comporte un boulon d'appui (19, 20, 21, 22, 23) muni d'un capteur (8, 56, 57, 63, 64, 66) du dispositif de mesure (7, 10, 13).

5. Véhicule à moteur selon la revendication 4, **caractérisé en ce que** le capteur (8, 56, 57, 63, 64, 66) est disposé axial ou radial ou en biais par rapport aux sens axial et radial sur ou dans le boulon d'appui (19, 20, 21, 22, 23).

6. Véhicule à moteur selon l'une quelconque des revendications précédentes, **caractérisé en ce que**, en tant que dispositif de mesure (13), au moins un capteur de siège (14) associé à au moins un siège (12) du véhicule à moteur (1, 68) est situé pour détecter une grandeur de force décrivant un poids d'occupant et/ou **en ce qu'**au moins un des au moins un dispositif de mesure (10) comporte un capteur de niveau de remplissage (11) détectant une quantité de carburant dans un réservoir (9) du véhicule à moteur (1, 68).

7. Véhicule à moteur selon l'une quelconque des revendications précédentes, **caractérisé en ce qu'**il est conçu sous la forme d'une machine de travail mobile, en particulier sous la forme d'un tracteur (2, 67).

8. Procédé de détermination d'une force d'appui de roue pour chaque roue (3, 69) d'un véhicule à moteur (1, 68) selon l'une quelconque des revendications précédentes, **caractérisé en ce que** ledit procédé comprend les étapes suivantes :
- la mesure d'au moins une grandeur de force, laquelle décrit la direction et la valeur d'une force d'action s'exerçant actuellement sur le véhicule à moteur (1, 68), modifiée par rapport à un état de base, au lieu d'action, au moyen d'au moins un dispositif de mesure (7, 10, 13), dans lequel le dispositif de mesure (7) est conçu pour mesurer les forces d'action agissant sur au moins un point d'appui du dispositif de suspension (5, 6), et
- le calcul de la force d'appui de roue à partir d'au moins une grandeur de force, du lieu d'action et des données de caractéristique du véhicule à moteur (1, 68) décrivant le poids et la structure géométrique du véhicule à moteur (1, 68) à l'aide du dispositif de commande (4).
